# EUROPÄISCHE PATENTSCHRIFT

(11) **EP 3 713 401 B1**
(45) Veröffentlichungstag und Bekanntmachung des Hinweises auf die Patenterteilung: **22.06.2022**
(21) Anmeldenummer: 18800637.3
(22) Anmeldetag: 09.11.2018
(51) Int. Cl.: A01K 13/00

(54) **TIERPFLEGE- UND/ODER REINIGUNGSEINRICHTUNG**
ANIMAL CARE AND/OR CLEANING DEVICE
DISPOSITIF DE SOIN D'ANIMAUX ET/OU DE NETTOYAGE

(30) Priorität: 20.11.2017 DE 102017010781
(43) Veröffentlichungstag der Anmeldung: 30.09.2020
(73) Patentinhaber: Suevia Haiges GmbH, 74366 Kirchheim/Neckar (DE)
(72) Erfinder: HAIGES, Frank, 74366 Kirchheim/Neckar (DE)
(74) Vertreter: Bartels und Partner, Patentanwälte
(86) Internationale Anmeldenummer: PCT/EP2018/080813
(87) Internationale Veröffentlichungsnummer: WO 2019/096706

(56) Entgegenhaltungen:
- EP-B1- 2 852 279
- WO-A1-2009/131439

## Beschreibung

Die Erfindung betrifft eine Tierpflege- und/oder Reinigungseinrichtung, mit mindestens einer Bürste, die an einer Bürstenwelle angebracht ist, die zum Erzeugen einer Drehbewegung der Bürste von einem elektromotorischen Antrieb antreibbar ist und in einer an einer Halteeinrichtung vorgesehenen Lagereinrichtung drehbar gelagert ist, und mit einer Betätigungseinrichtung, mittels deren der Antrieb in Abhängigkeit von einem Kontakt der Bürste mit einem Tierkörper betätigbar ist.

Einrichtungen dieser Art, die insbesondere zum Reinigen von Rindern zum Einsatz kommen, sind Stand der Technik. Beispielsweise offenbart das Dokument EP 2 359 684 A2 eine Einrichtung dieser Gattung, bei der die Lagereinrichtung des Bürstenkörpers in einem Bestandteil der Halteeinrichtung bildenden Ausleger bewegbar geführt und durch Belastung des Bürstenkörpers mit einem Tierkörper im Ausleger gegen Federkraft verschiebbar ist. Als Betätigungseinrichtung für den Antrieb ist ein Positionsdetektor vorgesehen, der eine Verschiebebewegung der Lagereinrichtung im Ausleger erkennt und die Antriebssteuerung veranlasst. Das Dokument DE 100 02 688 C2 offenbart eine Einrichtung der gleichen Gattung, bei der der Antrieb sowie die Lagereinrichtung für die Bürstenwelle zweier Bürsten an einer Parallelogramm-Rahmenkonstruktion gelagert sind, die Teil der Halteeinrichtung bildet und durch Kontakt mit einem Tierkörper gegen Federkraft relativ zu einer Tragstruktur bewegbar ist. Die Betätigungseinrichtung für den Antrieb weist ein Kontaktelement auf, das durch diese Relativbewegung kontaktierbar ist.

Weitere Tierpflege- und/oder Reinigungseinrichtungen gehen aus der EP 2 852 279 B1 und der WO 2009/131439 A1 hervor.

Ausgehend von diesem Stand der Technik stellt sich die Erfindung die Aufgabe, eine Einrichtung der eingangs genannten Gattung zur Verfügung zu stellen, die sich bei einfacher und robuster Bauweise durch eine besonders effektive Reinigungswirkung auszeichnet.

Erfindungsgemäß ist diese Aufgabe durch eine Tierpflege- und/oder Reinigungseinrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die Lagereinrichtung mindestens ein die Drehachse der Bürste in fester Lagebeziehung zur Halteeinrichtung haltendes Wellenlager aufweist und dass der Antrieb durch ein an der Bürstenwelle im einen oder anderen Drehsinn wirkendes Drehmoment, hervorgerufen durch eine Anstoßbewegung des Tierkörpers an der Bürste, maximal zu einem vorgebbaren Anschlag an der Halteeinrichtung mitgenommen ist und bei dieser Bewegung die Betätigungseinrichtung zwecks Betätigen des Antriebs auslöst. Dabei kann der Antrieb nahezu verzögerungsfrei angeschaltet werden, sobald er über die Wellenreibung, hervorgerufen durch die Anstoßbewegung der Bürste, mitgenommen ist.

Dadurch, dass erfindungsgemäß die Drehachse der zumindest einen Bürste mittels der Lagereinrichtung in fester Lagebeziehung zur Halteeinrichtung gehalten ist und die jeweilige Bürste dadurch bei Belastung durch einen Tierkörper keine nachgiebige Ausweich- oder Auslenkbewegung durchführt, ist eine effiziente Reinigungswirkung erreichbar, beispielsweise im Vergleich zu einer Abstützung der jeweiligen Bürstenwelle durch Federkraft, wie es bei den vorstehend genannten Lösungen des Standes der Technik der Fall ist. Gleichzeitig ermöglicht das Fehlen von den bei diesen Lösungen vorhandenen Gelenkverbindungen zur bewegbaren Aufhängung der Lagereinrichtung eine besonders einfache und kostengünstige Bauweise in einer robusten Bauform, die für den Einsatz im Bereich von Stallungen für Nutzvieh besonders betriebssicher ist. Während beim Stand der Technik die durch Tierkörperkontakt verursachten nachgiebigen Ausweich- oder Auslenkbewegungen mittels die Betätigungseinrichtung bildenden Näherungsschaltern, Neigungssensoren oder dergleichen detektierbar sind, ist bei der Erfindung durch ein durch Tierkörperkontakt an der Bürstenwelle hervorgerufenes Drehmoment der Antrieb verdrehbar und an einen jeweiligen Anschlag mitnehmbar, so dass für die Auslösung der Betätigungseinrichtung eine detektierbare Relativdrehung zur Verfügung steht.

Mit besonderem Vorteil kann die Anordnung so getroffen sein, dass das durch die Anstoßbewegung des Tierkörpers über die Bürste an der Bürstenwelle hervorgerufene Drehmoment mittels Reibung oder Hemmung an das Getriebe oder die Abtriebswelle des Antriebs zumindest teilweise weitergeleitet ist, so dass das Drehmoment den Antrieb mit seinem Gehäuse maximal bis zu seiner Anschlagstellung an dem vorgebbaren Anschlag der Halteeinrichtung mitnimmt. Für die sichere Drehmomentübertragung durch Hemmung oder Reibung kann mit Vorteil der Antrieb ein Schneckengetriebe mit Selbsthemmung oder einen üblichen Getriebemotor mit Eigenreibung aufweisen.

Hinsichtlich der Ausbildung der Betätigungseinrichtung kann die Anordnung mit Vorteil so getroffen sein, dass die Betätigungseinrichtung einen Schalter, vorzugsweise in Form eines Näherungsschalters, besonders bevorzugt in Form eines Vibrationsschalters, oder einen Sensor aufweist.

Mit Vorteil kann die Betätigungseinrichtung am Antrieb und/oder an der Halteeinrichtung angeordnet sein.

Bei vorteilhaften Ausführungsbeispielen weist die Halteeinrichtung ein an einer Tragstruktur, wie einer Gebäudewand, anbringbares Verankerungsteil und sich von diesem in einem Winkel von vorzugsweise 45° nach unten erstreckende Streben auf, an deren Enden der Lagerhalter des Wellenlagers angebracht ist.

Mit Vorteil kann der Lagerhalter einen U-Profilträger aufweisen, dessen zwischen seinen U-Schenkeln verlaufender, von der Bürstenwelle durchgriffener Profilsteg eine Ebene bildet, die zur Vertikalen derart geneigt ist, dass die den Profilsteg im rechten Winkel durchgreifende Bürstenwelle die gleiche Neigung zur Vertikalen wie die Streben besitzt.

Hierbei kann das Wellenlager am Profilsteg des U-Profilträgers derart angeordnet sein, dass die Bürstenwelle zwischen den Streben und zu diesen parallel verläuft und dass die Bürstenwelle mit ihrem Ende als Ausgangswelle eines elektrischen Getriebemotors in dessen Getriebe gelagert ist.

Bei besonders bevorzugten Ausführungsbeispielen weist die Bürste als Borstenträger eine Kreisscheibe auf, die mit dem zugeordneten Ende der Bürstenwelle verbunden ist.

Mit Vorteil kann die Anordnung hierbei so getroffen sein, dass die Länge des U-Profilträgers größer ist als der Durchmesser der Kreisscheibe und dass der U-Profilträger an seinen über diese vorstehenden Enden Anbringstellen für einen Ringkörper bildet, der sich im Abstand von der Kreisscheibe entlang von deren Umfang erstreckt. Bei dieser Anordnung bildet der Ringkörper eine Art Abdeckung, die den durch die sich drehende Kreisscheibe gebildeten, borstenfreien Bereich des Bürstenkörpers vor Berührung schützt. Wenn die erfindungsgemäße Einrichtung für den Einsatz bei Kälberställen vorgesehen ist, kann auch auf die große, über die Kreisscheibe vorstehende Baulänge des U-Profilträgers und einen die Kreisscheibe umgebenden Ringkörper als Anstoßschutz verzichtet werden.

Bei besonders vorteilhaften Ausführungsbeispielen, die sich durch eine besonders gute Reinigungswirkung auszeichnen, bildet die Bürste mit ihren Borsten einen Borstenkörper in Form eines Kegelstumpfes, der sich, von der Kreisscheibe ausgehend, mit einem Winkel von 25° konisch erweitert und in einer zur Kreisscheibe parallelen Ebene endet.

Mit Vorteil ist die Höhe des Kegels gleich groß oder vorzugsweise kleiner als die Hälfte des Durchmessers der Kreisscheibe.

Die Anordnung kann in vorteilhafter Weise so getroffen sein, dass der Kegel einen zur Bürstenwelle koaxialen, von Borsten freien Innenraum besitzt und dass im Innenraum ein zweiter Borstenkörper angeordnet ist, dessen Borsten aus der Ebene heraus vorstehen, die von den freien Enden der Borsten des den ersten Borstenkörper bildenden Kegels gebildet ist. Bei dieser Gestaltung passt sich der Wischbereich der Bürste in günstiger Weise an unregelmäßige Konturen betreffender Tierkörper an.

Mit Vorteil kann der zweite Borstenkörper im Wesentlichen die Form eines Kreiszylinders besitzen, wobei für den zweiten Borstenkörper auch Borsten einer gegenüber dem ersten Borstenkörper unterschiedlichen Art vorgesehen sein können.

Nachstehend ist die Erfindung anhand der beigefügten Zeichnung im Einzelnen erläutert. Es zeigen:
- Fig. 1: eine perspektivische Schrägansicht eines Ausführungsbeispiels der erfindungsgemäßen Einrichtung, wobei Bestandteil der zugehörigen Halteeinrichtung bildende Streben abgebrochen dargestellt sind;
- Fig. 2: eine Vorderansicht eines gegenüber Fig. 1 leicht abgewandel-ten Ausführungsbeispiels;
- Fig. 3: eine Seitenansicht des Ausführungsbeispiels von Fig. 2;
- Fig. 4: einen Vertikalschnitt des Ausführungsbeispiels, entsprechend der in Fig. 2 mit IV-IV angegebenen Schnittebene;
- Fig. 5: einen vergrößert gezeichneten Teilschnitt des in Fig. 4 mit V-V bezeichneten Bereichs;
- Fig. 6 und 7: eine perspektivische Schrägansicht bzw. einen Längsschnitt der gesondert dargestellten Bürste; und
- Fig. 8: einen Längsschnitt einer abgewandelten Ausführungsform der gesondert dargestellten Bürste.

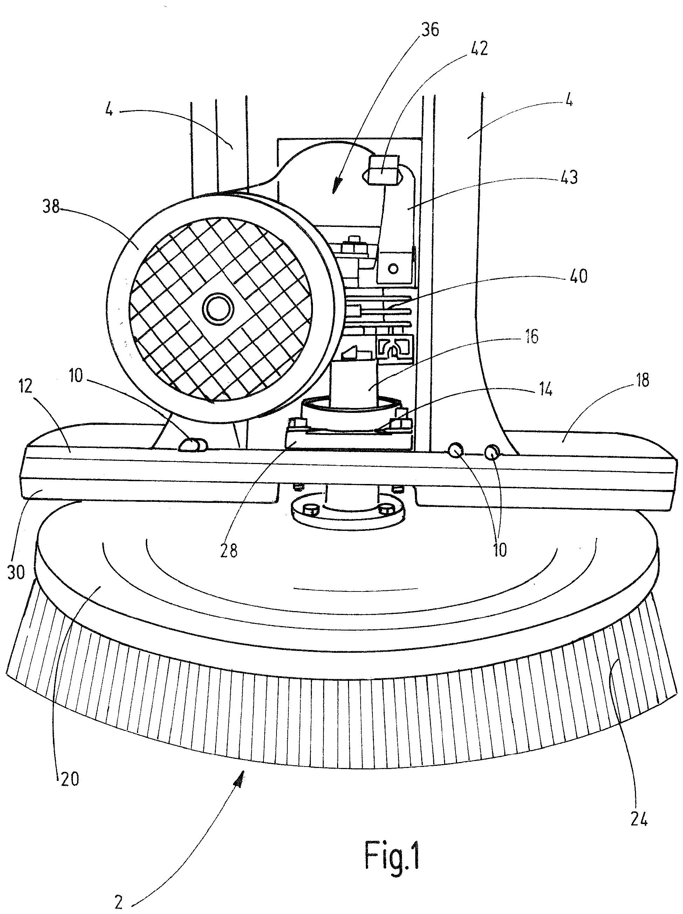

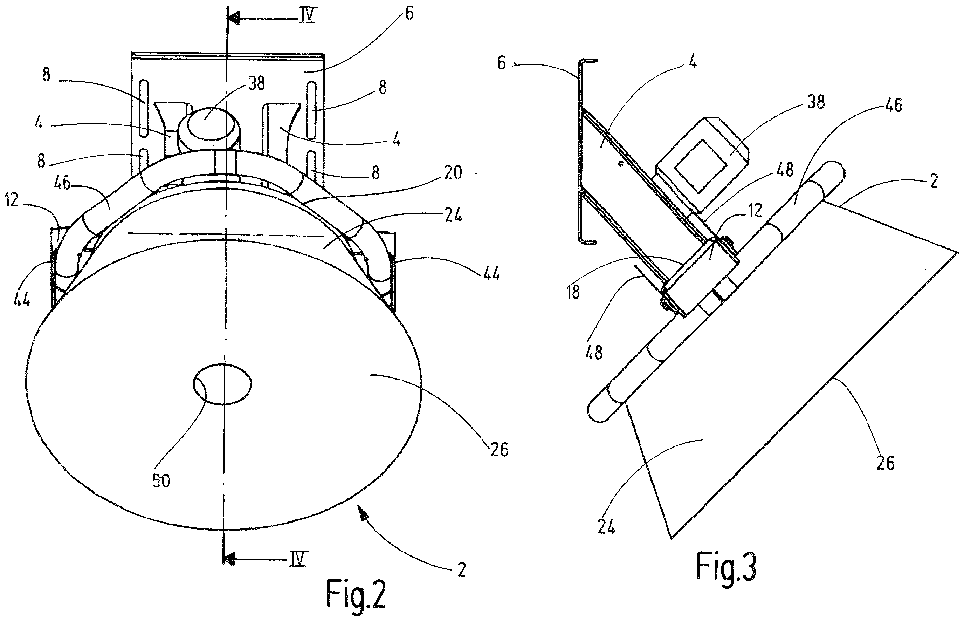

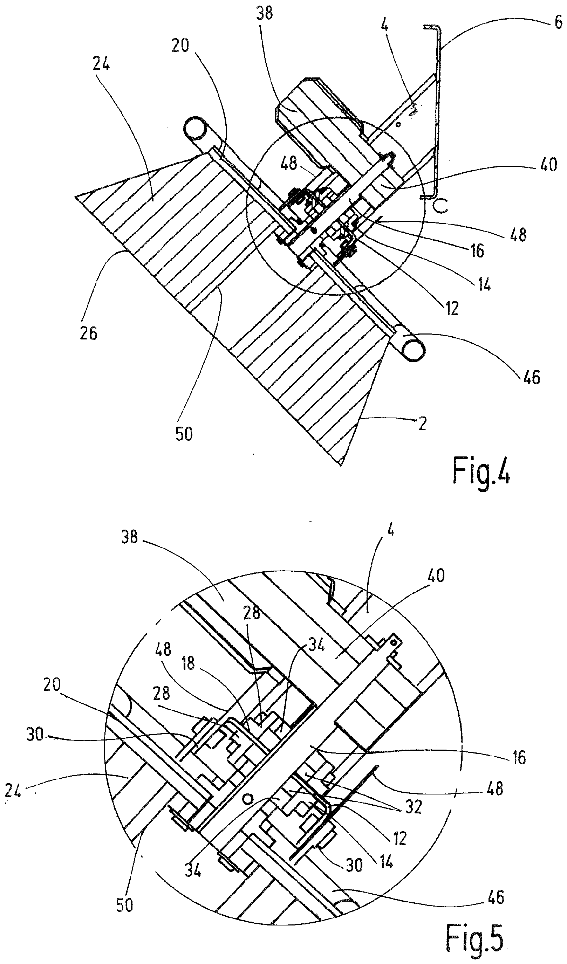

Die Fig. 1 zeigt von einer Halteeinrichtung, die den Träger für eine Bürste 2 bildet, lediglich den Endbereich von Streben 4, die an einem Verankerungsteil 6 durch Schweißen befestigt sind, das in den Fig. 2 bis 4 sichtbar ist. Das Verankerungsteil 6 hat die Form einer quadratischen Metallplatte, die mit Schlitzen 8 für Befestigungsschrauben versehen ist, mit denen das Verankerungsteil 6 an einer tragenden Struktur anbringbar ist, wie der Wand einer Stallung für Nutzvieh. Die Streben 4 sind so befestigt, dass sie sich, siehe Fig. 3 und 4, zur Ebene des Verankerungsteils 6 in einem Winkel von 45° nach unten geneigt erstrecken. Mit den unteren Enden sind die Streben 4 an Schweißstellen 10 (Fig. 1) mit einem U-Profilträger 12 verbunden, der den Lagerhalter für ein Wellenlager 14 bildet, in dem die Bürste 2 mit ihrer Bürstenwelle 16 gelagert ist. Entsprechend der Neigung der Streben 4 besitzt die vom Profilsteg 18 des U-Profilträgers 12 gebildete Ebene zur Vertikalen eine Neigung von 45°, so dass die Bürstenwelle 16, die mit ihrem Wellenlager 14 am Profilsteg 18 angebracht ist und diesen im rechten Winkel durchgreift, die gleiche Neigung von 45° besitzt.

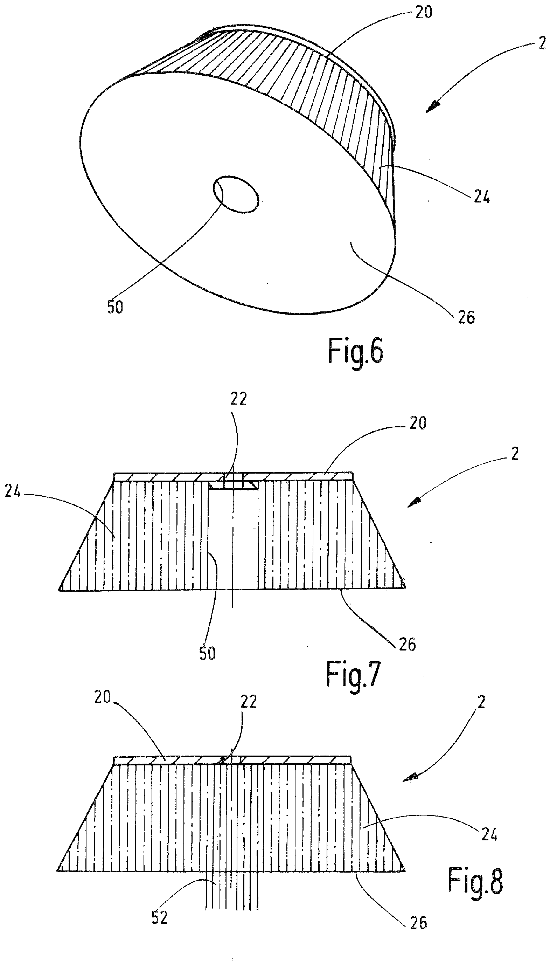

Mit ihrem freien, unteren Ende ist die Bürstenwelle 16 mit dem Borstenträger der Bürste 2 verbunden. Wie die Fig. 6 und 7 zeigen, in denen die Bürste 2 gesondert dargestellt ist, ist der Borstenträger durch eine Kreisscheibe 20 aus Kunststoff gebildet, die eine zentrale, von der Bürstenwelle 16 durchgriffene Bohrung 22 besitzt und an der ein Borstenkörper in Form eines Kegelstumpfes 24 angebracht ist. Der Kegel 24 ist durch Nylonborsten gebildet, die beim vorliegenden Beispiel einen Durchmesser von 2,5 mm besitzen. Wie am deutlichsten der Fig. 7 entnehmbar ist, besitzt der Kegel 24, von der Kreisscheibe 20 ausgehend, beim gezeigten Beispiel einen Öffnungswinkel von 25°, wobei die Borsten in einer zur Kreisscheibe 20 parallelen Ebene 26 enden und wobei die Höhe des den Borstenkörper bildenden Kegels 24 geringfügig kleiner ist als der Durchmesser der den Borstenträger bildenden Kreisscheibe 20.

Wie Fig. 1 und am deutlichsten Fig. 5 zeigen, weist das Wellenlager 14 als Lagerhalter Flanschringe 28 auf, die mit dem sich zwischen Profilschenkeln 30 des U-Profilsträgers 12 verlaufenden Profilsteg 18 verschraubt sind. Die Flanschringe 28 bilden den Halter für eine Wälzlagereinheit 32. Durch diese ist die Bürstenwelle 16 so gelagert, dass sie sich im Zwischenraum zwischen den Streben 4 zu diesen parallel erstreckt. Der Antrieb 36 weist einen Elektromotor 38 mit daran angeflanschtem Untersetzungsgetriebe 40 auf, das beim vorliegenden Beispiel durch ein Schneckengetriebe gebildet ist, wobei die Bürstenwelle 16 im Gehäuse des Getriebes 40 gelagert ist und dessen Ausgangswelle bildet. Bei einer durch Berühren der Bürste 2 mit einem Tierkörper ausgelösten Drehbewegung wird das hierbei an der Bürstenwelle 16 im einen oder anderen Drehsinn wirkende Drehmoment aufgrund der Selbsthemmung des Schneckengetriebes auf das Getriebe 40 übertragen, so dass der Antrieb 36 bei der Drehbewegung mitgenommen wird. Wie die Fig. 1, 4 und 5 zeigen befindet sich bei dem Verlauf der Bürstenwelle 16 zwischen den Streben 4 das Getriebe 40 und der angrenzende Teil des Elektromotors 38 im Raum zwischen den Streben 4. Bei der mitgenommenen Drehbewegung des Getriebes 40 bei von einem Tierkörper verursachtem Verdrehen der Bürste 2 bilden die Streben 4 beim Verdrehen in der einen oder anderen Richtung jeweils einen die Drehbewegung begrenzenden Anschlag. Diese Drehbewegung ist für das Auslösen der Betätigungseinrichtung zur Antriebssteuerung detektierbar, beispielsweise mittels eines Näherungsschalters oder dergleichen. Beim gezeigten Ausführungsbeispiel ist hierfür ein Vibrationsschalter 42 vorgesehen, der mit dem Gehäuse des Getriebes 40 über einen Träger 43 mechanisch gekoppelt ist, der spätestens beim Anstoßen an eine der Streben 4 erzeugte Vibration erkennt und einen Schaltimpuls an eine nicht dargestellte Elektronikschaltung übermittelt. In der Regel genügt aber bereits die Anstoßbewegung durch den Tierkörper, dass durch eine geringfügige Bewegung des Antriebs der Vibrationsschalter auslöst und den Motor 38 für den Antrieb der Bürste 2 anschaltet. Insoweit dient der Anschlag des Motorgehäuses an die Streben 4 nur dazu, dass der Motor 38 nicht ungewollt sich ständig weiterbewegt.

Das gegenüber Fig. 1 geringfügig abgewandelte Ausführungsbeispiel von Fig. 2 bis 5 ist an den über den Durchmesser der Kreisscheibe 20 nach außen vorstehenden Enden 44 (Fig. 2) des U-Profilträgers 12 mit einem aus Rundrohrabschnitten zusammengesetzten Ringkörper 46 verbunden. Dieser bildet eine Art Abdeckung und einen Schutz gegen Berührung der sich drehenden, borstenfreien Kreisscheibe 20 der Bürste 2. Des Weiteren ist, s. Fig. 4 und 5, eine Kunststoffhülse 48 an den seitlichen Schenkeln 30 des U-Profilträgers 12 angebracht, die die Bürstenwelle 16 umgibt, den freien Raum zwischen den Streben 4 im Bereich zwischen Getriebe 40 und dem U-Profilträger 12 überdeckt und in Fig. 1 nicht dargestellt ist.

Wie die Fig. 2 sowie 4 bis 7 zeigen, weist der den Borstenkörper bildende Kegel 24 einen von der Kreisscheibe 20 ausgehenden, zur Bürstenwelle 16 koaxialen Innenraum 50 auf, der von Borsten frei ist. Bei einer in Fig. 8 dargestellten, abgewandelten Ausführungsform der Bürste 2 ist im Innenraum 50 des den Borstenkörper bildenden Kegels 24 ein zweiter Borstenkörper 52 angeordnet, der im Wesentlichen die Form eines Kreiszylinders besitzt, wobei die Borsten des zweiten Borstenkörpers 52 über die Ebene 26, die von den Enden des Kegels 24 gebildet ist, hinaus vorstehen. Die Borsten des zweiten Borstenkörpers 52 können gleich ausgebildet sein wie die Borsten des den ersten Borstenkörper bildenden Kegels 24, können jedoch auch einen anderen Borstendurchmesser aufweisen oder von einem anderen Kunststoffmaterial gebildet sein. Vorzugsweise beträgt der axiale Überstand der Borsten des zweiten Borstenkörpers 52 über die Ebene 26 nicht mehr als die halbe axiale Höhe des Kegels 24 des ersten Borstenkörpers.

In teilweiser Übereinstimmung mit der Lösung nach der DE 100 02 688 C2 kann bei einer geänderten, nicht näher dargestellten Ausführungsform eine zweite, mit ihrer Drehachse horizontal angeordnete Bürste mit einer Bürste über ein Winkelgetriebe antreibbar gekoppelt sein, deren Drehachse vertikal verläuft und die wiederum mit der erfindungsgemäßen Betätigungseinrichtung, wie vorstehend beschrieben, zusammenwirkt. Beide Bürsten sind dann über ein Parallelogrammgestänge, respektive eine Rahmen-Konstruktion von einem Tierkörper antreibbar gelagert, um eine Anpassung an unterschiedliche Tiergrößen zu erlauben.

## Patentansprüche

1. Tierpflege- und/oder Reinigungseinrichtung, mit mindestens einer Bürste (2), die an einer Bürstenwelle (16) angebracht ist, die zum Erzeugen einer Drehbewegung der Bürste (2) von einem elektromotorischen Antrieb (36) antreibbar ist und in einer an einer Halteeinrichtung (4, 6) vorgesehenen Lagereinrichtung (14) drehbar gelagert ist und mit einer Betätigungseinrichtung mittels deren der Antrieb (36) in Abhängigkeit von einem Kontakt der Bürste (2) mit einem Tierkörper betätigbar ist, **dadurch gekennzeichnet, dass** die Lagereinrichtung (14) mindestens ein die Drehachse (16) der Bürste (2) in fester Lagebeziehung zur Halteeinrichtung (4, 6) haltendes Wellenlager (14) aufweist und dass der Antrieb (36) durch ein an der Bürstenwelle (16) im einen oder anderen Drehsinn wirkendes Drehmoment, hervorgerufen durch eine Anstoßbewegung des Tierkörpers an der Bürste (2), maximal zu einem vorgebbaren Anschlag an der Halteeinrichtung (4, 6) mitgenommen ist und bei dieser Bewegung die Betätigungseinrichtung (42) zwecks Betätigen des Antriebs (36) auslöst.

2. Tierpflege- und/oder Reinigungseinrichtung nach Anspruch 1, **dadurch gekennzeichnet, dass** das durch die Anstoßbewegung des Tierkörpers über die Bürste (2) an der Bürstenwelle (16) hervorgerufene Drehmoment mittels Reibung oder Hemmung an das Getriebe oder die Abtriebswelle des Antriebs (36) zumindest teilweise weitergeleitet ist, so dass das Drehmoment den Antrieb (36) mit seinem Gehäuse maximal bis zu seiner Anschlagstellung an dem vorgebbaren Anschlag der Halteeinrichtung (4, 6) mitnimmt.

3. Tierpflege- und/oder Reinigungseinrichtung nach Anspruch 1 oder 2, **dadurch gekennzeichnet, dass** der Antrieb (36) ein Schneckengetriebe mit Selbsthemmung oder ein üblicher Getriebemotor mit Eigenreibung ist.

4. Tierpflege- und/oder Reinigungseinrichtung nach einem der vorstehenden Ansprüche, **dadurch gekennzeichnet, dass** die Betätigungseinrichtung (42) einen Schalter, insbesondere in Form eines Näherungsschalters, vorzugsweise eines Vibrationsschalters, oder einen Sensor aufweist.

5. Tierpflege- und/oder Reinigungseinrichtung nach einem der vorstehenden Ansprüche, **dadurch gekennzeichnet, dass** die Betätigungseinrichtung (42) am Antrieb (36) und/oder an der Halteeinrichtung (4, 6) angeordnet ist.

6. Tierpflege- und/oder Reinigungseinrichtung nach einem der vorstehenden Ansprüche, **dadurch gekennzeichnet, dass** die Halteeinrichtung (4,6) ein an einer Tragstruktur, wie einer Gebäudewand, anbringbares Verankerungsteil (6) und sich von diesem in einem Winkel von vorzugsweise 45° nach unten erstreckende Streben (4) aufweist, an deren Enden ein Lagerhalter (12, 28) eines Wellenlagers (32) angebracht ist.

7. Tierpflege- und/oder Reinigungseinrichtung nach Anspruch 6, **dadurch gekennzeichnet, dass** der Lagerhalter (12, 28) einen U-Profilträger (12) aufweist, dessen zwischen seinen U-Schenkeln (30) verlaufender, von der Bürstenwelle (16) durchgriffener Profilsteg (18) eine Ebene bildet, die zur Vertikalen derart geneigt ist, dass die den Profilsteg (18) in rechtem Winkel durchgreifende Bürstenwelle (16) die gleiche Neigung zur Vertikalen wie die Streben (4) besitzt.

8. Tierpflege- und/oder Reinigungsvorrichtung nach Anspruch 6 oder 7, **dadurch gekennzeichnet, dass** das Wellenlager (32) am Profilsteg (18) des U-Profilträgers (12) derart angeordnet ist, dass die Bürstenwelle (16) zwischen den Streben (4) und zu diesem parallel verläuft und dass die Bürstenwelle (16) mit ihrem Ende als Ausgangswelle eines elektrischen Getriebemotors (38) in dessen Getriebe (40) gelagert ist.

9. Tierpflege- und/oder Reinigungseinrichtung nach einem der vorstehenden Ansprüche, **dadurch gekennzeichnet, dass** die Bürste (2) als Borstenträger eine Kreisscheibe (20) aufweist, die mit dem zugeordneten Ende der Bürstenwelle (16) verbunden ist.

10. Tierpflege- und/oder Reinigungseinrichtung nach einem der Ansprüche 7 bis 9, **dadurch gekennzeichnet, dass** die Länge des U-Profilträgers (12) größer ist als der Durchmesser der Kreisscheibe (20) und dass der U-Profilträger (12) an seinen über diese vorstehenden Enden (44) Anbringstellen für einen Ringkörper (46) bildet, der sich im Abstand von der Kreisscheibe (20) entlang von deren Umfang erstreckt.

11. Tierpflege- und/oder Reinigungseinrichtung nach Anspruch 9 oder 10, **dadurch gekennzeichnet, dass** die Bürste (2) mit ihren Borsten einen Borstenkörper in Form eines Kegelstumpfes (24) bildet, der sich, von der Kreisscheibe (20) ausgehend, mit einem Winkel von 25° konisch erweitert und in einer zur Kreisscheibe (20) parallelen Ebene (26) endet.

12. Tierpflege- und/oder Reinigungseinrichtung nach Anspruch 11, **dadurch gekennzeichnet, dass** die Höhe des Kegels (24) gleich groß oder vorzugsweise kleiner als die Hälfte des Durchmessers der Kreisscheibe (20) ist.

13. Tierpflege- und/oder Reinigungseinrichtung nach Anspruch 11 oder 12, **dadurch gekennzeichnet, dass** der Kegel (24) einen zur Bürstenwelle (16) koaxialen, von Borsten freien Innenraum (50) besitzt und dass im Innenraum (50) ein zweiter Borstenkörper (52) angeordnet ist, dessen Borsten aus der Ebene (26) heraus vorstehen, die von den freien Enden der Borsten des den ersten Borstenkörper bildenden Kegels (24) gebildet ist.

14. Tierpflege- und/oder Reinigungseinrichtung nach Anspruch 13, **dadurch gekennzeichnet, dass** der zweite Borstenkörper (52) im Wesentlichen die Form eines Kreiszylinders besitzt.

## Claims

1. Animal grooming and/or cleaning device comprising at least one brush (2), which is attached to a brush shaft (16) that can be driven by an electric motor drive (36) to produce a rotational movement of the brush (2) and is rotatably mounted in a mounting device (14) provided on a holding device (4, 6), and comprising an actuating device by means of which the drive (36) can be actuated as a function of the brush (2) making contact with an animal body, **characterised in that** the mounting device (14) comprises at least one shaft mount (14) holding the rotary shaft of the brush (2) in a fixed position in relation to the holding device (4, 6) and **in that** the drive (36) is entrained by a torque acting on the brush shaft (16) in either direction of rotation, caused by an impact movement of the animal body against the brush (2), at most to a pre-definable stop on the holding device (4,6) and, in this movement, triggers the actuating device (42) for the purpose of actuating the drive (36).

2. Animal grooming and/or cleaning device according to claim 1, **characterised in that** the torque caused by the impact movement of the animal body via the brush (2) on the brush shaft (16) is at least partially transmitted to the gear or drive shaft of the drive (36) by means of friction or locking such that the torque entrains the drive (36) with its housing at most up to its stop position on the pre-definable stop (25) of the holding device (4, 6).

3. Animal grooming and/or cleaning device according to either claim 1 or claim 2, **characterised in that** the drive (36) is a self-locking worm gear or a conventional gear motor with internal friction.

4. Animal grooming and/or cleaning device according to any one of the preceding claims, **characterised in that** the actuating device (42) comprises a switch, particularly in the form of a proximity switch, preferably a vibration switch, or a sensor.

5. Animal grooming and/or cleaning device according to any one of the preceding claims, **characterised in that** the actuating device (42) is arranged on the drive (36) and/or on the holding device (4, 6).

6. Animal grooming and/or cleaning device according to any one of the preceding claims, **characterised in that** the holding device (4, 6) comprises an anchoring part (6) that can be attached to a support structure, such as a building wall, and struts (4) extending downwards from said part at an angle of preferably 45°, a mount holder (12, 28) of a shaft mount (32) being attached at the ends of said struts.

7. Animal grooming and/or cleaning device according to claim 6, **characterised in that** the mount holder (12, 28) comprises a U-profile support (12), the profile web (18) of which, running between the U-legs (30) thereof and penetrated by the brush shaft (16), forms a plane which is inclined with respect to the vertical such that the brush shaft (16) passing at a right angle through the profile web (18) has the same inclination with respect to the vertical as the struts (4).

8. Animal grooming and/or cleaning device according to either claim 6 or claim 7, **characterised in that** the shaft mount (32) is arranged on the profile web (18) of the U-profile support (12) such that the brush shaft (16) runs between the struts (4) and parallel thereto and **in that** the brush shaft (16) is mounted with its end as an output shaft of an electric gear motor (38) in the gear (40) thereof.

9. Animal grooming and/or cleaning device according to any one of the preceding claims, **characterised in that** the brush (2) comprises a circular disc (20) as a brush carrier, said disc being connected to the assigned end of the brush shaft (16).

10. Animal grooming and/or cleaning device according to any one of claims 7 to 9, **characterised in that** the length of the U-profile support (12) is greater than the diameter of the circular disc (20) and **in that** the U-profile support (12) forms attachment points for an annular body (46) at its ends (44) protruding over said disc, said annular body extending at a distance from the circular disc (20) along the circumference thereof.

11. Animal grooming and/or cleaning device according to either claim 9 or claim 10, **characterised in that** the brush (2) with its bristles forms a bristle body in the form of a truncated cone (24), which, proceeding from the circular disc (20), widens conically with an angle of 25° and ends in a plane parallel (26) to the circular disc (20).

12. Animal grooming and/or cleaning device according to claim 11, **characterised in that** the height of the cone (24) is the same size as or preferably smaller than half the diameter of the circular disc (20).

13. Animal grooming and/or cleaning device according to either claim 11 or claim 12, **characterised in that** the cone (24) has an inner space (50) that is free from bristles and runs coaxially with respect to the brush shaft (16), and **in that** a second bristle body (52) is arranged in the inner space (50), the bristles of said second body protruding from the plane (26) formed by the free ends of the bristles of the cone (24) forming the first bristle body.

14. Animal grooming and/or cleaning device according to claim 13, **characterised in that** the second bristle body (52) substantially has the form of a circular cylinder.

## Revendications

1. Dispositif de soin aux animaux et/ou de nettoyage, comprenant au moins une brosse (2), montée sur un arbre (16) de brosse, qui, pour la production d'un mouvement de rotation de la brosse (2), peut être entraîné par un entraînement (36) à moteur électrique et qui est monté tournant dans un dispositif (14) de palier prévu sur un dispositif (4, 6) de maintien et comprenant un dispositif d'actionnement au moyen duquel l'entraînement (36) peut être actionné en fonction d'un contact de la brosse (2) avec le corps d'un animal, **caractérisé en ce que** le dispositif (14) de palier a au moins un palier (14) d'arbre, maintenant l'axe (16) de rotation de la brosse (2) en relation de position fixe par rapport au dispositif (4, 6) de maintien et **en ce que** l'entraînement (36) est, par un couple agissant sur l'arbre (16) de brosse dans un sens de rotation ou dans l'autre, provoqué par un mouvement de poussée du corps de l'animal sur la brosse (2), entraîné au maximum jusqu'à une butée pouvant être donnée à l'avance, du dispositif (4, 6) de maintien et, dans ce mouvement, déclenche le dispositif (42) d'actionnement en vue d'actionner l'entraînement (36).

2. Dispositif de soin aux animaux et/ou de nettoyage suivant la revendication 1, **caractérisé en ce que** le couple, provoqué par le mouvement de poussée du corps de l'animal par l'intermédiaire de la brosse (2) sur l'arbre (16) de brosse, est transmis au moins en partie au moyen d'un frottement ou d'une entrave à la transmission ou à l'arbre de sortie de l'entraînement (36) de sorte que le couple entraîne l'entraînement (36) par sa carcasse au maximum jusqu'à sa position de butée sur la butée, pouvant être donnée à l'avance, du dispositif (4, 6) de maintien.

3. Dispositif de soin aux animaux et/ou de nettoyage suivant la revendication 1 ou 2, **caractérisé en ce que** l'entraînement (36) est un engrenage à vis sans fin à blocage automatique ou un motoréducteur habituel à frottement propre.

4. Dispositif de soin aux animaux et/ou de nettoyage suivant l'une des revendications précédentes, **caractérisé en ce que** le dispositif (42) d'actionnement a un interrupteur, notamment sous la forme d'un interrupteur de proximité, de préférence un interrupteur à vibration, ou un capteur.

5. Dispositif de soin aux animaux et/ou de nettoyage suivant l'une des revendications précédentes, **caractérisé en ce que** le dispositif (42) d'actionnement est monté sur l'entraînement (36) et/ou sur le dispositif (4, 6) de maintien.

6. Dispositif de soin aux animaux et/ou de nettoyage suivant l'une des revendications précédentes, **caractérisé en ce que** le dispositif (4, 6) de maintien a une partie (6) d'arrimage pouvant être mise sur une structure porteuse, comme un mur de bâtiment, et, s'étendant vers le bas à partir de celle-ci suivant un angle de préférence de 45°, des jambes (4) de force, aux extrémités desquelles est monté un support (12, 28) d'un palier (32) d'arbre.

7. Dispositif de soin aux animaux et/ou de nettoyage suivant la revendication 6, **caractérisé en ce que** le support (12, 28) de palier a un profilé (12) en U, dont l'âme (18) s'étendant entre les branches (30) du U et traversée par l'arbre (16) de la brosse, forme un plan, qui est incliné sur la verticale, de manière à ce que l'arbre (16) de la brosse, traversant l'âme (18) du profilé suivant un angle droit, possède la même inclinaison sur la verticale que les jambes (4) de force.

8. Dispositif de soin aux animaux et/ou de nettoyage suivant la revendication 6 ou 7, **caractérisé en ce que** le palier (32) d'arbre est monté sur l'âme (18) du profilé (12) en U, de manière à ce que l'arbre (16) de brosse s'étende entre les jambes (4) de force et parallèlement à celui-ci et de manière à ce que l'arbre (16) de la brosse soit monté par son bout comme arbre de sortie d'un motoréducteur (38) électrique à engrenage dans sa transmission (40).

9. Dispositif de soin aux animaux et/ou de nettoyage suivant l'une des revendications précédentes, **caractérisé en ce que** la brosse (2) a comme support de brosse un disque (20) circulaire, qui est relié au bout associé de l'arbre (16) de la brosse.

10. Dispositif de soin aux animaux et/ou de nettoyage suivant l'une des revendications 7 à 9, **caractérisé en ce que** la longueur du profilé (12) en U est plus grande que le diamètre du disque (20) circulaire et **en ce que** le profilé (12) en U forme à ses extrémités (44) en saillie de celui-ci des points de montage d'une pièce (46) annulaire, qui s'étend à distance du disque (20) circulaire, le long de son pourtour.

11. Dispositif de soin aux animaux et/ou de nettoyage suivant la revendication 9 ou 10, **caractérisé en ce que** la brosse (2) forme par ses soies un corps de soies sous la forme d'un tronc de cône (24), qui s'élargit coniquement suivant un angle de 25° à partir du disque (20) circulaire et se termine dans un plan (26) parallèle au disque (20) circulaire.

12. Dispositif de soin aux animaux et/ou de nettoyage suivant la revendication 11, **caractérisé en ce que** la hauteur du cône (24) est égale ou de préférence inférieure à la moitié du diamètre du disque (20) circulaire.

13. Dispositif de soin aux animaux et/ou de nettoyage suivant la revendication 11 ou 12, **caractérisé en ce que** le cône (24) possède un espace (50) intérieur coaxial à l'arbre (16) de la brosse et exempt de soie et **en ce que**, dans l'espace (50) intérieur, est disposé un deuxième corps (52) de soie, dont les soies font saillie du plan (26), qui est formé par les extrémités libres des soies du cône (24) formant le premier corps de soie.

14. Dispositif de soin aux animaux et/ou de nettoyage suivant la revendication 13, **caractérisé en ce que** le deuxième corps (52) de soie possède sensiblement la forme d'un cylindre de section droite circulaire.
